# EUROPÄISCHE PATENTSCHRIFT

(11) **EP 0 603 471 B1**
(45) Veröffentlichungstag und Bekanntmachung des Hinweises auf die Patenterteilung: **27.03.1996**
(21) Anmeldenummer: 93114810.0
(22) Anmeldetag: 15.09.1993
(51) Int. Cl.: H02K 49/10

(54) **Antriebsvorrichtung zur Bewegung von Gegenständen**
A drive unit to move objects
Appareil moteur pour actionner des objets

(30) Priorität: 18.12.1992 DE 4242888
(43) Veröffentlichungstag der Anmeldung: 29.06.1994
(73) Patentinhaber: Festo KG, D-73734 Esslingen (DE)
(72) Erfinder: Stoll, Kurt, Dipl.-Ing., D-73732 Esslingen (DE); Volzer, Johannes, D-72535 Heroldstatt (DE); Lohrmann, Günter, D-72649 Wolfschlugen (DE)
(74) Vertreter: Abel, Martin, Dipl.-Ing.

(56) Entgegenhaltungen:
- DE-B- 2 207 126
- DE-U- 8 230 398
- PATENT ABSTRACTS OF JAPAN, unexamined applications, E Field, Band 10, Nr. 244, 22. August 1986 THE PATENT OFFICE JAPANESE GOVERNMENT Seite 62 E 430; & JP-A-61-73 570 (TOWA KOGYO)
- PATENT ABSTRACTS OF JAPAN, unexamined applications, E Field, Band 11, Nr. 343, 10. November 1987 THE PATENT OFFICE JAPANESE GOVERNMENT Seite 122 E 555; & JP-A-62-123 954 (DAIDO)
- PATENT ABSTRACTS OF JAPAN, unexamined applications, E Field, Band 10, Nr. 244, 22. August 1986 THE PATENT OFFICE JAPANESE GOVERNMENT Seite 62 E 430; & JP-A-61-73 570
- PATENT ABSTRACTS OF JAPAN, unexamined applications, E Field, Band 11, Nr. 343, 10. November 1987 THE PATENT OFFICE JAPANESE GOVERNMENT Seite 122 E 555; & JP-A-62-123 954

## Beschreibung

Die Erfindung betrifft eine Antriebsvorrichtung zur Bewegung von Gegenständen, mit einem rohrförmigen Gehäuse, an dem eine Bewegungseinheit längsbeweglich geführt ist, die ein im Innern des Gehäuses angeordnetes Antriebsteil und ein magnetisch mit diesem bewegungsgekoppeltes, außen am Gehäuse angeordnetes Abtriebsteil aufweist, wobei zur magnetischen Kopplung am Antriebsteil eine innere permanentmagnetische Magneteinrichtung und am Abtriebsteil eine mit der vorgenannten zusammenarbeitende äußere permanentmagnetische Magneteinrichtung vorgesehen ist.

Antriebsvorrichtungen dieser Art sind häufig als sogenannte kolbenstangenlose Arbeitszylinder ausgebildet. Beispiele für solche Antriebsvorrichtungen ergeben sich beispielsweise aus der DE-GM 1 982 379, der DE 29 22 444 C2, der DE-GM 82 30 398 oder DE-AS 22 07 126. Die dortigen zeichnen sich überwiegend dadurch aus, daß die Magneteinrichtungen ring- oder hülsenförmig ausgebildet sind und einander koaxial umschließen. Sofern die miteinander gekoppelten Magneteinrichtungen, wie in der DE-GM 1 982 379 gezeigt, von magnetischen Formstücken gebildet sind, bedarf es einiger Zusatzmaßnahmen, um eine Verdrehung zwischen den beiden magnetischen Formteilen zu verhindern, was ein Abreißen der Bewegungskopplung zur Folge hätte. In allen Fällen sind die Magneteinrichtungen wegen der besonderen Formanpassung an die Kontur des Zylinderrohres sehr teuer in der Herstellung. Darüberhinaus treten je nach Polarisierung erhebliche Streuverluste auf, was sich negativ auf das Verhältnis zwischen dem Magnetvolumen und der erzielbaren Kopplungskraft der Magneteinrichtungen auswirkt.

Es ist die Aufgabe der Erfindung, eine Antriebsvorrichtung der eingangs genannten Art zu schaffen, die bei kompaktem und einfacherem Aufbau sowie bei kostengünstigerer Herstellung eine hohe magnetische Kopplungskraft zwischen den Magneteinrichtungen des Antriebsteils und des Abtriebsteils gewährleistet.

Zur Lösung dieser Aufgabe ist vorgesehen, daß die zwischen dem Antriebsteil und dem Abtriebsteil angeordnete Wand des Gehäuses mindestens einen sich entlang des möglichen Hubes der Bewegungseinheit erstreckenden streifenähnlichen Wandabschnitt mit ebener Ausdehnung aufweist, und daß die beiden Magneteinrichtungen jeweils eine ebene Ausdehnung besitzen und parallel zu dem ebenen Wandabschnitt ausgerichtet sind, der zwischen den beiden Magneteinrichtungen verläuft.

Anstelle kompliziert geformter und nur sehr aufwendig magnetisierbarer Magneteinrichtungen kommen nun einfach gestaltete und flach bauende Magneteinrichtungen mit ebener Ausdehnung zum Einsatz. Solche ebenen Magneteinrichtungen lassen sich verhältnismäßig einfach magnetisieren, so daß die Herstellung sehr kostengünstig ist. Wegen der möglichen flachen Bauweise und der Parallelanordnung bezüglich des dazwischen liegenden ebenen Wandabschnittes des Gehäuses lassen sich äußerst kompakt bauende Anordnungen realisieren. Allein schon wegen der Gestaltung der Gehäusewand kann überdies auf komplizierte Maßnahmen zur Verdrehsicherung verzichtet werden. Man erreicht ein sehr gutes Verhältnis zwischen den Magnetvolumen und der erzielbaren Kopplungskraft, so daß bei verhältnismäßig klein bauenden Magneteinrichtungen hohe Nutzlasten durch das Abtriebsteil transportierbar sind. Infolge der Abkehr von einem rotationssymmetrischen Verlauf der Gehäusewand läßt sich das Gehäuse ferner so gestalten, daß es erheblich größere Biegemomente aufnehmen kann. Dadurch lassen sich große Hübe der Bewegungseinheit bei geringster Durchbiegung des rohrförmigen Gehäuses verwirklichen.

Vorteilhafte Weiterbildungen der Erfindung sind in den Unteransprüchen aufgeführt.

Es ist von Vorteil, wenn eine jeweilige Magneteinrichtung mehrere platten- oder stabförmige Magnetelemente umfaßt, die in Längsrichtung des Gehäuses aufeinanderfolgend angeordnet sind und die sich jeweils paarweise gegenüberliegen. Im Vergleich zu einstückigen Magneteinrichtungen läßt sich hier bei gleichem Magnetvolumen eine in der Regel höhere Kopplungskraft erzielen.

Als derzeit optimale Lösung werden Magneteinrichtungen mit insbesondere stabförmigen Magnetelementen angesehen, wobei die Stablängsrichtung quer zur Gehäuselängsrichtung verläuft und wobei die einzelnen Magnetelemente mit einer rechtwinkelig zur Gehäuselängsrichtung und zur Stablängsrichtung ausgerichteten Querpolarisation versehen sind. Die jeweiligen Nord- und Südpole eines jeweiligen Magnetelementes sind hier rechtwinkelig zur Ausdehnungsebene der Magneteinrichtungen aufeinanderfolgend angeordnet. An der dem ebenen Wandabschnitt entgegengesetzten Außenseite der Magnetelemente der äußeren Magneteinrichtung, wie auch an der vom ebenen Wandabschnitt abgewandten Innenseite der Magnetelemente der inneren Magneteinrichtung kann jeweils ein insbesondere plattenförmiges Flußleitteil aus vorzugsweise ferromagnetischem Material vorgesehen sein, das praktisch eine Bündelung der magnetischen Feldlinien verursacht und Streuverluste erheblich reduziert.

Um die einander zugeordneten Magneteinrichtungen möglichst nahe beieinander anordnen zu können, ist es zweckmäßig, den ebenen Wandabschnitt möglichst dünnwandig auszubilden. Dies birgt jedoch die Gefahr, daß der ebene Wandabschnitt bei Innendruckbeaufschlagung des Gehäuses - die insbesondere beim Betrieb als kolbenstangenloser Arbeitszylinder auftritt - nach außen gewölbt beziehungsweise ausgebaucht wird. Damit dieser Effekt die Leichtgängigkeit der Längsbewegung der Bewegungseinheit nicht beeinträchtigt, ist es zweckmäßig, axial beidseits der äußeren Magneteinrichtung, also an den in die beiden möglichen Bewegungsrichtungen weisenden Endbereichen der äußeren Magneteinrichtung - abtriebsteilseitig jeweils mindestens ein Drückelement vorzusehen, das gegen den ebenen Wandabschnitt des Gehäuses arbeitet und diesen in die im wesentlichen dem unbelasteten Zustand entsprechende unverformte Position zurückdrückt. Als Drückelement kann zwar ein mit einer geeigneten Einführschräge oder einer Einführwölbung ausgestattetes Gleitelement vorgesehen sein. Optimal erscheint jedoch, insbesondere wegen der reduzierten Reibung, die Ausgestaltung der Drückelemente als drehbar gelagerte Drückrollen. Sofern das Antriebsteil Dichtungen trägt, was bei der Ausgestaltung als Kolben regelmäßig der Fall ist, werden die Drückelemente zweckmäßigerweise in dem den Dichtungen radial außen gegenüberliegenden Bereich angeordnet, so daß der ebene Wandabschnitt optimal an der Dichtung anliegt.

Nachfolgend wird die Erfindung anhand der beiliegenden Zeichnung näher erläutert. In dieser zeigen:
- Figur 1: eine bevorzugte Bauform der Antriebsvorrichtung in Gestalt eines kolbenstangenlosen Arbeitszylinders im Längsschnitt gemäß Schnittlinie I-I aus Figur 2, wobei von dem Gehäuse lediglich ein Längenabschnitt dargestellt ist und die stirnseitigen Gehäusedeckel strichpunktiert abgebildet sind,
- Figur 2: einen Querschnitt durch die Antriebsvorrichtung aus Figur 1 gemäß Schnittlinie II-II,
- Figur 3: einen Längsschnitt durch die Antriebsvorrichtung aus Figur 1 gemäß Schnittlinie III-III, wobei im wesentlichen nur ein aus Kunststoffmaterial bestehender Träger für Magnetelemente gezeigt ist,
- Figur 4: einen Querschnitt durch eine andere Bauform der Antriebsvorrichtung,
- Figur 5: ein vergrößertes Detail einer weiteren Bauform der Antriebsvorrichtung, wobei ein als Gleitelement ausgebildetes Drückelement gezeigt wird,
- Figur 6: ein Detail einer weiteren Ausführungsform der Antriebsvorrichtung im Bereich des ebenen Wandabschnittes, wobei im Gegensatz zu der bei Figuren 1 bis 3 vorgesehenen Querpolarisierung eine Längspolarisierung der Magneteinrichtungen vorgesehen ist,
- Figur 7: die schematische Verdeutlichung des unter Innendruck stehenden Gehäuses unter Berücksichtigung der optimalen Anbringung eines Schutzstreifens, und
- Figur 8: eine Antriebsvorrichtung, die einen aus mehreren miteinander gekoppelten Gehäusen bestehenden Gehäusekomplex aufweist.

Bei sämtlichen in der Zeichnung dargestellten Ausführungsformen der Antriebsvorrichtung 1 handelt es sich um einen insbesondere pneumatisch betätigten kolbenstangenlosen Arbeitszylinder 2. Sie verfügt über ein rohrähnliches Gehäuse 3, das beispielsgemäß ein Zylinderrohr bildet, und das an beiden Stirnseiten durch jeweils einen Gehäusedeckel 4, 4' verschlossen ist. Das Gehäuse 3 hat bevorzugt lineare Ausdehnung, die Längsachse, d.h. die Gehäuse-Längsrichtung, trägt die Bezugsziffer 5. Entlang der letzteren hin und her beweglich ist eine Bewegungseinheit 6 vorgesehen. Diese umfaßt ein Antriebsteil 7 und ein Abtriebsteil 8. Das Antriebsteil 7 ist im Innenraum 9 des Gehäuses 3 längsbeweglich geführt aufgenommen. Es ist beim Ausführungsbeispiel von einem Kolben gebildet und unterteilt den Innenraum 9 axial in zwei Arbeitsräume 13, 13'. Jeder dieser Arbeitsräume 13, 13' kommuniziert mit einem Druckmittelkanal 14, 14', der vorzugsweise im zugeordneten Gehäusedeckel 4, 4' verläuft und den Anschluß an eine Fluidversorgung ermöglicht. Durch an sich bekannte Druckbeaufschlagung beziehungsweise Belüftung der Arbeitsräume 13, 13' über die Druckmittelkanäle 14, 14' kann das Antriebsteil 7 zu einer Bewegung in Gehäuselängsrichtung 5 angetrieben werden.

Das Abtriebsteil 8 ist außerhalb des Gehäuses 3 angeordnet, wobei es zweckmäßigerweise unmittelbar an dem Gehäuse 3 längsbeweglich geführt ist. Es ist von Vorteil, wenn es das Gehäuse 3 wie abgebildet manschettenartig vollständig umschließt. Seine axiale Baulänge kann im wesentlichen derjenigen des Antriebsteils 7 entsprechen. Die Längsposition des Antriebsteils 7 und des Abtriebsteils 8 bezüglich des Gehäuses 3 ist identisch, das Antriebsteil 7 wird von dem Abtriebsteil 8 praktisch umgriffen.

Damit sich die praktisch in sich starre Bewegungseinheit 6 ergibt, sind das Antriebsteil 7 und das Abtriebsteil 8 miteinander magnetisch bewegungsgekoppelt. Hierzu verfügt das Antriebsteil 7 über zwei innere permanentmagnetische Magneteinrichtungen 15, 15' und das Abtriebsteil 8 ist mit zwei äußeren Magneteinrichtungen 16, 16' ausgestattet. Jeweils eine innere und eine äußere Magneteinrichtung sind einander paarweise zugeordnet und bilden somit zwei Magneteinrichtungspaare 15, 16; 15', 16', die einander durch die unmagnetische und unmagnetisierbare Wandung 17 des Gehäuses 3 hindurch anziehen. Wird das Antriebsteil 7 axial verlagert, so bewegt sich das Abtriebsteil 8 mit. Auf diese Weise kann ein mit dem Abtriebsteil 8 verbundener Gegenstand beziehungsweise eine Last transportiert werden.

Die Transportkraft hängt maßgeblich von der magnetischen Kopplungskraft zwischen den Magneteinrichtungspaaren ab. Aus diesem Grunde sind beispielsgemäß zwei solcher Paare vorgesehen, die einander diametral beziehungsweise rechtwinkelig zur Gehäuselängsrichtung 5 gegenüberliegen. Denkbar wären allerdings bei entsprechend umgestaltetem Gehäuse 3 auch mehr solcher Magneteinrichtungspaare. Bei relativ geringer Beanspruchung würde auch ein einziges Magneteinrichtungspaar genügen.

Anstelle einer Fluidbetätigung des Antriebsteils 7 könnte man sich auch eine mechanische Betätigung vorstellen, beispielsweise mittels eines Elektromotors und einer Antriebsspindel.

Der Querschnitt des Gehäuses 3 ist nicht-rotationssymmetrisch, also unkreisförmig. Im Bereich eines jeweiligen Magneteinrichtungspaares 15, 16; 15', 16' verfügt die Wandung 17 über einen sich entlang des möglichen Hubes der Bewegungseinheit 6, und insbesondere entlang der gesamten Gehäuselänge erstreckenden Wandabschnitt 18, 18' mit ebener Ausdehnung, der praktisch eine streifen- oder bandförmige Gestalt hat (nachfolgend als ebener Wandabschnitt 18, 18' bezeichnet).

Beim Ausführungsbeispiel verlaufen die beiden ebenen Wandabschnitte 18, 18' in parallelen Ebenen mit Abstand zueinander.

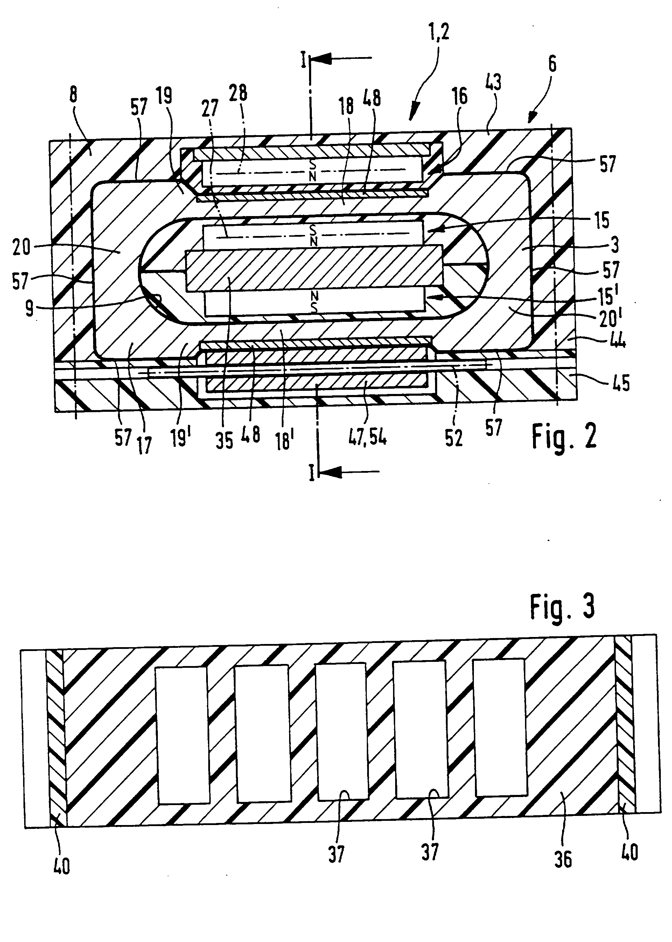

Das Gehäuse 3 hat im Querschnitt gemäß Figur 2 gesehen eine rechteckähnliche Struktur, und die beiden ebenen Wandabschnitte 18, 18' sind Bestandteil zweier (19, 19') der sich jeweils paarweise gegenüberliegenden vier Wandungsabschnitten, die nachfolgend als Gehäusewände 19, 19'; 20, 20' bezeichnet werden. Besagte Gehäusewände 19, 19' sind beim Ausführungsbeispiel länger als die beiden anderen Gehäusewände 20, 20', so daß das Gehäuse 3 eine flachrohrähnliche Gestalt hat. Betriebsbereit installiert ist das Gehäuse 3 vorzugsweise so angeordnet, daß die beiden die ebenen Wandabschnitte 18, 18' aufweisenden Gehäusewände 19, 19' nach oben beziehungsweise unten weisen und die schmäleren Gehäusewände 20, 20' vertikal ausgerichtet sind. Die letzteren sind bevorzugt relativ dickwandig ausgeführt, so daß sie zum einen hochbelastbar gegenüber Innendruck sind und zum anderen eine hohe Biegesteifheit schaffen, mit der Folge, daß das Gehäuse 3 auch bei sehr großer Längenausdehnung kaum zum Durchhängen neigt.

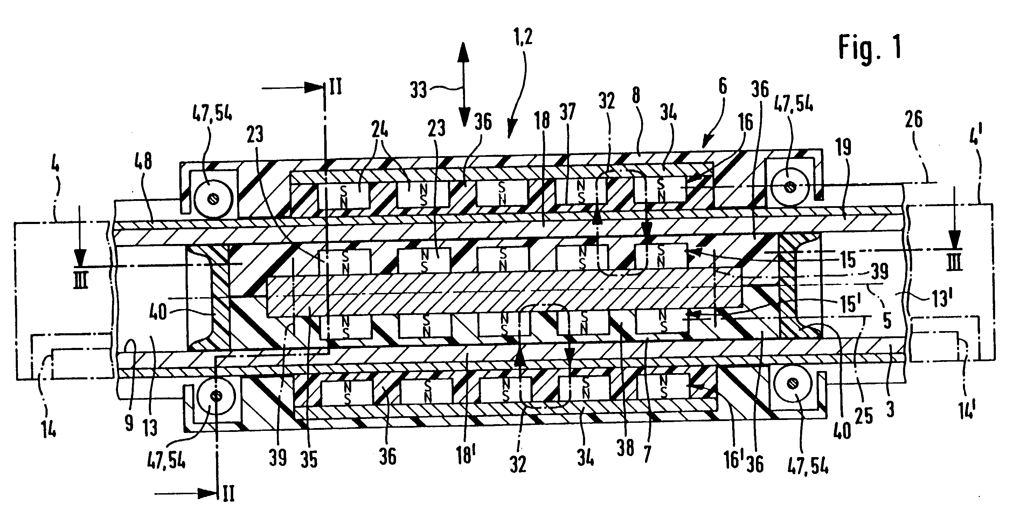

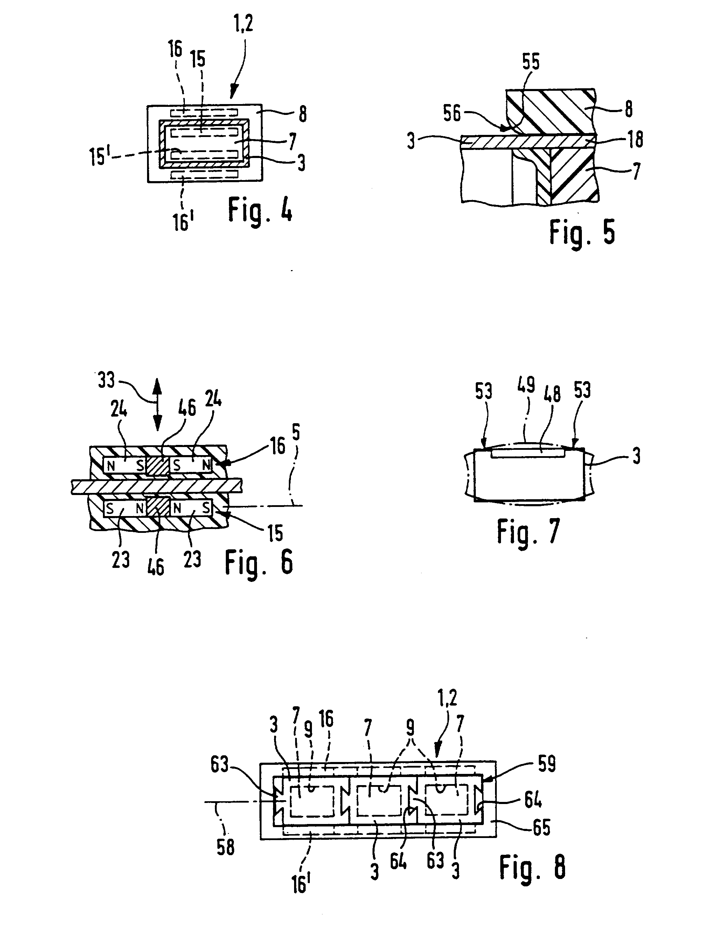

Die Figur 4 macht deutlich, daß das Gehäuse 3 durchaus nach Art eines klassischen Rechteckrohres ausgebildet sein kann. Problematische Bereiche sind allerdings, insbesondere im Hinblick auf eine Abdichtung des Antriebsteiles 7, die inneren Eckenbereiche. Zweckmäßig ist es daher, diese abzurunden, sowie dies beim Ausführungsbeispiel gemäß Figuren 1 bis 3 der Fall ist. Der Innenraum 9 hat dort sogar eine flachovalähnliche Konturierung. Im Bereich der ebenen Wandabschnitte 18, 18' ergibt sich eine ebene Innenfläche, die anschließend in eine insbesondere kreisförmig gebogene Innenfläche übergeht, so daß die Innenfläche im Bereich der vertikalen Gehäusewände 20, 20' einen insbesondere vollständig abgerundeten Verlauf besitzt.

Sämtliche Magneteinrichtungen 15, 15', 16, 16' verfügen entsprechend dem ebenen Wandabschnitt 18, 18' über eine ebene Ausdehnung und sind parallel zu dem jeweils zugeordneten ebenen Wandabschnitt ausgerichtet. Es ergibt sich daher praktisch ein Schichtaufbau, wobei jeweils einer der ebenen Wandabschnitte 18, 18' zwischen einem Paar innerer und äußerer Magneteinrichtungen 15, 16; 15', 16' angeordnet ist (Figuren 1 und 2).

Wie aus den Figuren 1 bis 3 und 6 hervorgeht, besteht eine jeweilige Magneteinrichtung 15, 15', 16, 16' bevorzugt aus mehreren einzelnen Magnetelementen 23, 24, die innerhalb einer jeweiligen Magneteinrichtung in der zugeordneten Ausdehnungsebene 25, 26 in Gehäuselängsrichtung 5 aufeinanderfolgend angeordnet sind. Innerhalb eines jeweiligen Magneteinrichtungspaares 15, 16; 15', 16' liegt hierbei einem jeweiligen inneren Magnetelement 23 ein äußeres Magnetelement 24 rechtwinkelig zu den Ausdehnungsebenen 25, 26 gegenüber. Beispielsgemäß handelt es sich um stabförmige Magnetelemente 23, 24, deren Längsachsen 27, 28 rechtwinkelig zur Gehäuselängsrichtung 5 und parallel zu den Ausdehnungsebenen 25, 26 verlaufen, wobei die Magnetelemente 23, 24 untereinander in Parallellage ausgerichtet sind. Der quer zu ihrer Längsachse 27, 28 verlaufende Querschnitt der Magnetelemente 23, 24 ist jeweils rechteckig mit bevorzugt unterschiedlich langen Seitenflächen-Paaren, wobei die jeweils größeren Seitenflächen parallel zu den Ausdehnungsebenen 25, 26 verlaufen. Zweckmäßigerweise ergibt sich über die gesamte Magnetelementenlänge ein konstanter Rechteckquerschnitt.

Im Falle der bevorzugten Ausgestaltung gemäß Figuren 1 bis 3 weisen die einzelnen Magnetelemente 23, 24 jeweils eine rechtwinkelig zur zugeordneten Ausdehnungsebene 25, 26 gerichtete Quer- oder Radialpolarisation auf. Die Magnetpole eines jeweiligen Magnetelementes 23, 24 folgen also in besagter Querrichtung aufeinander. Innerhalb einer jeweiligen Magneteinrichtung 15, 16, 15', 16' sind in Gehäuselängsrichtung 5 unmittelbar benachbarte Magnetelemente 23, 24 allerdings mit einander entgegengesetzter Magnetpolausrichtung angeordnet, so daß beispielsweise an der vom Gehäuse abgewandten Außenseite der äußeren Magnetelemente 24 eine Nord-Süd-Nord-Süd...Polverteilung vorliegt. Die Magnetelemente 23, 24 eines jeweiligen Magneteinrichtungspaares 15, 16; 15', 16' sind so angeordnet, daß jeweils ungleichnamige Magnetpole einander zugewandt sind. Auf diese Weise bildet sich unter Einbeziehung von jeweils zwei benachbarten Magnetelementepaarungen geschlossene Feldlinien 32 aus, die das Antriebsteil 7 und das Abtriebsteil 8 im Normalfall einander gegenüber axial unbeweglich fixieren.

Da bei dieser Querpolarisation die magnetischen Feldlinien 32 in Querrichtung 33, also im wesentlichen rechtwinkelig zu den Ausdehnungsebenen 25, 26 aus den Magnetelementen 23, 24 austreten, hat es sich als vorteilhaft erwiesen, zwischen in Gehäuselängsrichtung 5 beabstandeten Magnetelementen 23, 24 jeweils einen gewissen Abstand vorzusehen und bei jeder Magneteinrichtungspaarung an der vom ebenen Wandabschnitt 18, 18' abgewandten Außenseite der äußeren Magnetelemente 24 und Innenseite der inneren Magnetelemente 23 eine Flußleitplatte 34, 35 vorzusehen. Die Flußleitplatte 34, 35 erstreckt sich jeweils parallel zu den Ausdehnungsebenen 25, 26 über zweckmäßigerweise zumindest die gesamte von einer Magneteinrichtung 15, 15', 16, 16' eingenommenen Ausdehnungsfläche. Die Magnetelemente 23, 24 stehen insbesondere in unmittelbarem Kontakt mit der zugeordneten Flußleitplatte 34, 35, an die sie angeklebt sein können. Die Flußleitplatten 34, 35 bestehen aus Weicheisen und bewirken praktisch einen Kurzschluß zwischen den ungleichnamigen Polen einer jeweiligen Magnetelementenreihe. Als Effekt ist eine Bündelung beziehungsweise Umlenkung der Feldlinien 32 gemäß Figur 1 festzustellen, wodurch Streueffekte reduziert werden und sich eine erhöhte magnetische Kopplungskraft einstellt. In den Zwischenräumen zwischen axial benachbarten Magnetelementen 23; 24 befindet sich zweckmäßigerweise Luft oder ein nichtferromagnetisches Material wie Kunststoff.

Sind wie beim Ausführungsbeispiel mehrere innere Magneteinrichtungen 15, 15' vorgesehen, ist es aus Kostengründen zweckmäßig, am Antriebsteil 7 eine allen inneren Magneteinrichtungen 15, 15' gemeinsame einzige Flußleitplatte 35 zuzuordnen, die insbesondere zentral in dem Antriebsteil 7 verläuft. Die zentrale Flußleitplatte 35 des Ausführungsbeispiels gemäß Figuren 1 bis 3 trägt an ihren beiden voneinander abgewandten größeren Plattenflächen jeweils eine der beiden inneren Magneteinrichtungen 15, 15'. Die Flußleitplatten 34, 35 können unter Umständen auch mehrteilig ausgebildet sein.

Damit sich die Magnetfelder der einzelnen Magneteinrichtungspaare 15, 16; 15', 16' möglichst nicht gegenseitig beeinflußen, sind die Magnetelemente 23 der beiden inneren Magneteinrichtungen 15, 15' so angeordnet, daß sie sich ebenfalls paarweise in Querrichtung 33 gegenüberliegen, wobei allerdings jeweils gleichnamige Pole einander zugewandt sind. Dies ist sehr gut aus Figur 1 zu erkennen. Auf diese Weise wird ein direkter Querdurchgang der magnetischen Feldlinien zwischen den sich gegenüberliegenden Magneteinrichtungspaaren verhindert.

Jeder Magneteinrichtung 15, 15', 16, 16' ist vorzugsweise ein insbesondere aus Kunststoffmaterial bestehendes Trag- oder Abdeckteil 36 zugeordnet, in das die Magnetelemente 23, 24 eingebettet sind. Diese Trag- beziehungsweise Abdeckteile 36 sitzen an der auch die zugeordneten Magnetelemente 23, 24 aufweisenden Flachseite der Flußleitplatten 34, 35, wobei sie die Magnetelemente 23, 24 - abgesehen von denen der Flußleitplatte zugewandten Flächen - insbesondere vollständig umschließen. In Figur 3 ist ein Trag- beziehungsweise Abdeckteil 36 im Längsschnitt gezeigt, und man erkennt eine Längsreihe von taschenartigen Ausnehmungen 37, in denen die Magnetelemente 23, 24 einsitzen. Die Magnetelemente 23, 24 sind somit zum ebenen Wandabschnitt 18, 18' hin abgedeckt und zuverlässig vor einer eventuell schädlichen Berührung mit dem Gehäuse 3 geschützt.

Im Falle des beispielsgemäßen Antriebsteiles 7 bilden die beiden vorhandenen Trag- bzw. Abdeckteile 36 vorzugsweise den Körper 38 des Antriebsteils 7 der von der Innenfläche des Innenraumes 9 axial beweglich geführt ist und dessen Außenkontur der Kontur des Innenraumes 9 entspricht (Figur 2). Die Trag- bzw. Abdeckteile 36 sind mithin im Bereich ihrer Längsränder abgerundet. Somit besteht der Körper 38 aus zwei Teilkörpern, die die beiden inneren Magneteinrichtungen 15, 15' und die diesen gemeinsame Flußleitplatte 35 umschließen. Die Flußleitplatte 35 wird randseitig allseits von dem Körper 38 überragt und umschlossen. Die beiden beim Ausführungsbeispiel hälftigen Teilkörper können z.B. miteinander verschraubt (bei 39) und/oder miteinander verklebt sein.

Im Bereich seiner beiden in Gehäuselängsrichtung 5 weisenden Stirnseiten trägt das Antriebsteil 7 jeweils eine Dichtung 40. Sie ist entsprechend dem Innenraum 9 konturiert und insbesondere als Lippendichtung ausgebildet. Sie kann mit einem Haltevorsprung in einer Haltenut festgelegt sein, die sich im Bereich der Trennstelle zwischen den beiden von den Trag- bzw. Abdeckteilen 36 gebildeten Teilkörpern befindet (nicht dargestellt). Auch eine Klebeverbindung wäre denkbar. Die Dichtlippen der Dichtungen 40 liegen an der Innenfläche des Innenraumes 9 an und verhindern einen Übertritt von Druckmittel zwischen den beiden Arbeitsräumen 13, 13'.

Im Falle der äußeren Magneteinrichtungen 16, 16' ist ein jeweiliges Trag- bzw. Abdeckteil 36 insbesondere fest mit der zugeordneten Flußleitplatte 34 verklebt. Die auf diese Weise entstandenen Baueinheiten sind vorzugsweise an einem Grundkörper 43 des Abtriebsteils 8 festgelegt, der das Gehäuse umschließt. Er besteht zweckmäßigerweise aus unmagnetischen und unmagnetisierbarem Material, beispielsweise ein geeignetes Metall oder Kunststoff. Zur Vereinfachung der Montage kann der Grundkörper 43 mehrteilig ausgebildet sein. Beispielsgemäß besteht er aus zwei Teilen, einem U-förmigen ersten Teil 44 und einem plattenförmigen zweiten Teil 45. Das erste Teil 44 sitzt reiterartig auf dem Gehäuse 3, und das zweite Teil 45 ist an die offene Seite des U-förmigen ersten Teils 44 angesetzt und z.B. mit diesem verschraubt.

Eine andere Art der Magnetisierung der Magnetelemente 23, 24 ist in Figur 6 gezeigt. Hier liegt eine in Gehäuselängsrichtung 5 ausgerichtete Längspolarisation vor, wobei die einzelnen Magnetpole in Gehäuselängsrichtung 5 aufeinanderfolgen. Hier ist es von Vorteil, wenn innerhalb einer jeweiligen Magneteinrichtung 15, 15', 16, 16' in Gehäuselängsrichtung 5 unmittelbar aufeinanderfolgende Magnetelemente so angeordnet sind, daß jeweils gleichnamige Magnetpole einander zugewandt sind. In dem Zwischenraum zwischen axial benachbarten Magnetelementen einer jeweiligen Magneteinrichtung befindet sich überdies zweckmäßigerweise ein Flußleitstück 46 aus weichmagnetischem Material. Bei einem jeweiligen Magneteinrichtungspaar 15, 16; 15', 16' ist zu beachten, daß sich jeweils ungleichnamige Magnetpole in Querrichtung 33 gegenüberliegen. Eine Flußleitplatte wie beim Ausführungsbeispiel gemäß Figuren 1 bis 3 ist hier nicht vorgesehen. Im übrigen kann der Aufbau demjenigen gemäß Figuren 1 bis 3 entsprechen.

Nunmehr zurückkommend auf Figuren 1 und 2 ist ersichtlich, daß die ebenen Wandabschnitte 18, 18' relativ dünnwandig sind, insbesondere im Vergleich zu den übrigen Bereichen der Gehäusewände 19, 19', 20, 20'. Man kann sich dieses Gehäuse 3 vorstellen als Rohr mit äußerer Rechteckkontur, wobei außen im Bereich der größeren Rechteckseiten in Gehäuselängsrichtung 5 verlaufende mittige Vertiefungen eingebracht sind, so daß nur noch die ebenen Wandabschnitte 18, 18' mit reduzierter Wanddicke verbleiben. Ein derartiges Profil läßt sich beispielsweise durch Strangpressen relativ einfach herstellen. Während demnach die neben den ebenen Wandabschnitten 18, 18' gelegenen Wandbereiche äußerst druckfest sind, können die ebenen Wandabschnitte 18, 18' bei Innendruckbeaufschlagung dazu neigen, sich nach außen zu wölben. Dies könnte beim Betrieb als kolbenstangenloser Arbeitszylinder der Fall sein.

Wie die inneren Magnetelemente 23 sind auch die äußeren Magnetelemente 24 mit möglichst geringem Spiel in unmittelbarer Nähe des zugeordneten ebenen Wandabschnittes 18, 18' angeordnet. Das gegebenenfalls noch zwischengefügte Trag- bzw. Abdeckteil 36 kann sogar in Berührkontakt mit dem ebenen Wandabschnitt 18, 18' stehen. Ein ausgebauchter bzw. ausgewölbter Wandabschnitt würde die Bewegungsfähigkeit des Abtriebsteils 8 erheblich einschränken, es bestünde eine Verklemmungsgefahr zwischen dem Abtriebsteil 8 und dem Gehäuse 3.

Beispielsgemäß ist daher einer jeweiligen äußeren Magneteinrichtung 16, 16' vorzugsweise beidseits in Gehäuselängsrichtung 5 ein Drückelement 47 vorgelagert, das am Abtriebsteil 8 angeordnet ist und sich mit diesem mitbewegt. Die Drückelemente 47 stützen sich einerseits am Abtriebsteil 8 ab und üben andererseits eine Druckkraft auf den zugeordneten ebenen Wandabschnitt 18, 18' aus. Wird demnach die Bewegungseinheit 6 in Gehäuselängsrichtung 5 verfahren, so drücken die in Bewegungsrichtung vor den äußeren Magneteinrichtungen 16, 16' angeordneten Drückelemente 47 die zuvor eventuell geringfügig ausgewölbten Wandabschnitte 18, 18' wieder in ihre ebene Ursprungsgestalt zurück. Man kann deshalb die äußeren Magneteinrichtungen 16, 16' ohne Klemmgefahr äußerst nahe am Gehäuse 3 vorsehen.

Die Drückelemente 47 können unmittelbar gegen die ebenen Wandabschnitte 18, 18' arbeiten, sofern die zulässige Wandbelastung nicht überschritten wird. Da das Gehäuse 3 regelmäßig aus Aluminiummaterial bestehen wird, ist es allerdings zweckmäßig, die vom Innenraum 9 abgewandte Außenfläche der ebenen Wandabschnitte 18, 18' jeweils insbesondere vollständig mit einem verschleißfesten Schutzstreifen 48 zu belegen, mit dem die zugeordneten Drückelemente 47 in unmittelbarem Kontakt stehen können. Derartige, beim Ausführungsbeispiel vorhandene Schutzstreifen 48 bestehen aus Federstahl mit unmagnetischen bzw. unmagnetisierbaren Eigenschaften, so daß die Magnetfelder nicht beeinträchtigt werden. Bevorzugt ist ein jeweiliger Schutzstreifen 48 auf den zugeordneten ebenen Wandabschnitt 18, 18' fest und dauerhaft aufgeklebt, so daß sich ein zusammenhängender Klebeverbund ergibt.

Wenn das Gehäuse unter Innendruck steht, wird sich annähernd die in Figur 7 strichpunktiert angedeutete Spannungsverteilung 49 entlang des Gehäuseumfanges einstellen. Man erkennt im randnahen Bereich der längeren Rechteckseiten Wechselzonen 53, in denen die Zugspannung in eine Druckspannung übergeht und die vorhandenen Schubspannungen in Normalenrichtung bezüglich der Rohroberfläche verlaufen. Damit die Schutzstreifen 48 trotz der hohen Zug-Druck-Wechselbeanspruchung sicher im Klebeverbund verbleiben, ist zweckmäßigerweise vorgesehen, daß die Ränder der zwischen Schutzstreifen 48 und ebenem Wandabschnitt 18, 18' verlaufenden Klebeschicht entlang der Wechselzonen 53 verlaufen.

Außerdem sollte vorgesehen sein, daß die Dicke eines jeweiligen ebenen Wandabschnittes 18, 18' und die Dicke des zugeordneten Schutzstreifens 48 so aufeinander abgestimmt sind, daß die dazwischenliegende Klebeschicht im Bereich der spannungsneutralen Faser des Klebeverbundes zu liegen kommt.

Die Drückelemente 47 sind vorzugsweise so positioniert, daß sie der Dichtung 40 des zugeordneten Endes des Antriebsteils 7 in Querrichtung 33 gegenüberliegen . Dies fördert den Dichtkontakt zwischen der Innenfläche der ebenen Wandabschnitte 18, 18' und einer jeweiligen Dichtung 40.

Die Bewegungseinheit 6 ist besonders leichtgängig, wenn die Drückelemente 47 wie beim Ausführungsbeispiel gemäß Figuren 1 und 2 als Drückrollen 54 ausgebildet sind. Diese sind am Abtriebsteil 8 insbesondere an dessen Grundkörper 43 drehgelagert, wobei die Drehachse 52 rechtwinkelig zur Gehäuselängsrichtung 5 und parallel zu den Ausdehnungsebenen 25, 26 verläuft. Es handelt sich zweckmäßigerweise um walzenähnliche Drückrollen 54, die zumindest annähernd die gesamte Breite des Schutzstreifens 48 einnehmen, auf dem sie mit ihrer Umfangsfläche abrollen.

Anstelle drehbarer Drückrollen 54 können auch Gleitelemente oder Gleitpartien 55 am Abtriebsteil 8 vorgesehen sein, wie dies in Figur 5 angedeutet ist. Diese sollten an der in Gehäuselängsrichtung 5 von den äußeren Magneteinrichtungen 16, 16' wegweisenden Seiten zum Gehäuse 3 hin mit einer Einführschräge oder Einführrundung 56 ausgestattet sein, damit die ausgebauchten Wandpartien von den sich bewegenden Gleitpartien 55 allmählich und ohne Klemmgefahr in die Ausgangslage zurückgedrückt werden.

Beim Ausführungsbeispiel haben die Drückelemente 47 keinerlei Führungsfunktion in Bezug auf die Fortbewegung der Bewegungseinheit 6. Zur Bewegungsführung sind statt dessen mehrere Gleitflächenpaarungen 57 zwischen dem Abtriebsteil 8 und dem Gehäuse 3 vorgesehen, die insgesamt eine Längsführung bilden. Besagte Gleitflächenpaarungen 57 sind beim Ausführungsbeispiel in denjenigen Umfangsbereichen des Gehäuses 3 vorgesehen, die zwischen den beiden ebenen Wandabschnitten 18 verlaufen. Insbesondere sofern das Gehäuse 3 als Aluminiumprofil ausgebildet ist, sollten die zugeordneten Gleitflächen des Abtriebsteils 8 aus Kunststoffmaterial bestehen. Möglich wäre es auch, das Zylinderrohr aus insbesondere faserverstärktem Kunststoffmaterial herzustellen.

Seitens der Magneteinrichtungen wäre es auch denkbar, als Magnetelemente unterschiedlich magnetisierte Magnetpartien einer einstückigen Magnetplatte vorzusehen, was beim Ausführungsbeispiel gemäß Figur 8 angedeutet ist.

Die erfindungsgemäße Antriebsvorrichtung eröffnet sehr variable Gestaltungsmöglichkeiten. Anhand der Figur 8 wird beispielsweise deutlich, daß mehrere Gehäuse 3 der beschriebenen Art längsseitig aneinandergereiht werden können, so daß sich ein in einer gemeinsamen Ausdehnungsebene 58 liegender Gehäusekomplex 59 ergibt. Voraussetzung ist jedoch, daß die Gehäuse 3 mit geeigneten Kupplungsmitteln 63, 64 ausgestattet sind, die ein insbesondere lösbares Aneinanderkuppeln der Gehäuse 3 ermöglichen. Beispielsgemäß ermöglichen die Kupplungsmittel 63, 64 ein formschlüssiges Zusammenfügen, so daß letztlich eine Gehäuseeinheit mit mehreren Innenräumen 9 und einer entsprechenden Anzahl von Antriebsteilen 7 vorliegt. Die Ausdehnungsebene 58 des Gehäusekomplexes 59 verläuft vorzugsweise parallel zu den Ausdehnungsebenen 25, 26 der Magneteinrichtungen 15, 15', 16, 16'. Als Kupplungsmittel 63, 64 können zusammenpassende Nuten und Befestigungsvorsprünge vorgesehen sein, die eine Art Nut- und Federverbindung ermöglichen und beispielsweise ein Schwalbenschwanzprofil aufweisen.

Anstelle einer der Gehäuseanzahl entsprechenden Anzahl von Abtriebsteilen ist bei der Antriebsvorrichtung 1 der Figur 8 ein einziges, allen Antriebsteilen 7 gemeinsames Gesamt-Abtriebsteil 65 vorgesehen, das alle äußeren Magneteinrichtungen 16, 16' trägt. Die vorhandenen äußeren Magneteinrichtungen 16, 16' sind dabei in eine einstückige Platte integriert, die Partien unterschiedlicher Polarisation aufweist, so daß man auch von einer wechselpolig magnetisierten Magnetplatte sprechen könnte. Natürlich wäre es auch möglich, die Magneteinrichtungen in Gestalt separater Magnetelemente der oben beschriebenen Art und Weise auszubilden. Von Vorteil ist es, wenn der Gehäusekomplex 59 von dem Gesamt-Abtriebsteil 65 vollständig umschlossen wird. Im übrigen können die bei der Antriebsvorrichtung gemäß Figur 8 verwendeten Einzel-Antriebsvorrichtung in der anhand der Figuren 1 bis 7 erläuterten Art ausgestaltet sein. Ein Vorteil dieser Mehrfachanordnung besteht darin, daß mit einer erheblich geringeren Tendenz zu Auswölbungen der ebenen Wandabschnitte 18, 18' zu rechnen ist als bei einer Anordnung mit einem einzigen, entsprechend größeren Gehäuse.

## Patentansprüche

1. Antriebsvorrichtung zur Bewegung von Gegenständen, mit einem rohrförmigen Gehäuse (3), an dem eine Bewegungseinheit (6) längsbeweglich geführt ist, die ein im Innern (9) des Gehäuses (3) angeordnetes Antriebsteil (7) und ein magnetisch mit diesem bewegungsgekoppeltes, außen am Gehäuse (3) angeordnetes Abtriebsteil (8) aufweist, wobei zur magnetischen Kopplung am Antriebsteil (7) eine innere permanentmagnetische Magneteinrichtung (15, 15') und am Abtriebsteil (8) eine mit der vorgenannten zusammenarbeitende äußere permanentmagnetische Magneteinrichtung (16, 16') vorgesehen ist, dadurch gekennzeichnet, daß die zwischen dem Antriebsteil (7) und dem Abtriebsteil (8) angeordnete Wand (19, 19', 20, 20') des Gehäuses (3) mindestens einen sich entlang des möglichen Hubes der Bewegungseinheit (6) erstreckenden streifenähnlichen Wandabschnitt (18, 18') mit ebener Ausdehnung aufweist, und daß die beiden Magneteinrichtungen (15, 15', 16, 16') jeweils eine ebene Ausdehnung besitzen und parallel zu dem ebenen Wandabschnitt (18, 18') ausgerichtet sind, der zwischen den beiden Magneteinrichtungen (15, 16; 15', 16') verläuft.

2. Antriebsvorrichtung nach Anspruch 1, dadurch gekennzeichnet, daß am Antriebsteil (7) und am Abtriebsteil (8) jeweils mehrere innere und äußere Magneteinrichtungen (15, 15', 16, 16') angeordnet sind, so daß sich mehrere Paare (15, 16; 15', 16') von inneren und äußeren ebenen Magneteinrichtungen ergeben, zwischen denen sich jeweils ein ebener Wandabschnitt (18, 18') des Gehäuses (3) erstreckt.

3. Antriebsvorrichtung nach Anspruch 2, dadurch gekennzeichnet, daß das Gehäuse (3) zwei sich quer zur Gehäuselängsrichtung (5) gegenüberliegende und parallel zueinander verlaufende ebene Wandabschnitte (18, 18') aufweist, denen jeweils ein Magneteinrichtungspaar (15, 16; 15', 16') zugeordnet ist.

4. Antriebsvorrichtung nach einem der Ansprüche 1 bis 3, dadurch gekennzeichnet, daß eine jeweilige Magneteinrichtung (15, 15', 16, 16') aus mehreren platten- oder stabförmigen Magnetelementen (22, 24) besteht, die in Längsrichtung (5) des Gehäuses (3) aufeinanderfolgend angeordnet sind, wobei einem jeweiligen Magnetelement (23) einer inneren Magneteinrichtung (15, 15') ein Magnetelement (24) der dieser zugeordneten äußeren Magneteinrichtung (16, 16') quer zur Gehäuselängsrichtung (5) gegenüberliegt.

5. Antriebsvorrichtung nach Anspruch 4, dadurch gekennzeichnet, daß jedes Magnetelement (23, 24) - im Längsschnitt gemäß einer sich in Gehäuselängsrichtung (5) und rechtwinkelig zur Ausdehnungsebene (25, 26) der Magneteinrichtung (15, 15', 16, 16') erstreckenden Längsschnittebene - einen rechteckigen Querschnitt aufweist.

6. Antriebsvorrichtung nach Anspruch 4 oder 5, dadurch gekennzeichnet, daß mehrere und insbesondere alle Magnetelemente (23, 24) mindestens einer Magneteinrichtung (15, 15', 16, 16') von Magnetpartien einer einstückigen Magnetplatte gebildet sind.

7. Antriebsvorrichtung nach einem der Ansprüche 1 bis 6, dadurch gekennzeichnet, daß die Magneteinrichtungen (15, 15', 16, 16') eine rechtwinkelig zu ihrer Ausdehnungsebene (25, 26) ausgerichtete Querpolarisation aufweisen, wobei innerhalb eines jeweiligen Magneteinrichtungspaares (15, 16; 15', 16') ungleichnamige Magnetpole einander zugewandt sind.

8. Antriebsvorrichtung nach Anspruch 7 in Verbindung mit einem der Ansprüche 4 bis 6, dadurch gekennzeichnet, daß in Gehäuselängsrichtung (5) benachbarte Magnetelemente (23; 24) einer jeweiligen Magneteinrichtung (15, 15'; 16, 16') mit einander entgegengesetzter Magnetpolausrichtung angeordnet sind.

9. Antriebsvorrichtung nach Anspruch 8, dadurch gekennzeichnet, daß in Gehäuselängsrichtung (5) aufeinanderfolgende Magnetelemente (23; 24) mit Abstand zueinander angeordnet sind, wobei die Zwischenräume zweckmäßigerweise frei von magnetischem und magnetisierbarem Material sind.

10. Antriebsvorrichtung nach einem der Ansprüche 7 bis 9, dadurch gekennzeichnet, daß auf der von einer jeweils zugeordneten Magneteinrichtung (15, 15'; 16, 16') abgewandten Innen- bzw. Außenseite einer jeweiligen inneren und/oder äußeren Magneteinrichtung (15, 15'; 16, 16') eine sich entlang sämtlicher Magnetelemente (23, 24) erstreckende Flußleitplatte (34, 35) vorgesehen ist, mit der die Magnetelemente (23, 24) zweckmäßigerweise in Kontakt stehen.

11. Antriebsvorrichtung nach Anspruch 10 in Verbindung mit Anspruch 2 oder 3, dadurch gekennzeichnet, daß am Antriebsteil (7) eine zentrale Flußleitplatte (35) für die Magnetelemente (23) sämtlicher inneren Magneteinrichtungen (15, 15') vorgesehen ist.

12. Antriebsvorrichtung nach einem der Ansprüche 1 bis 6, dadurch gekennzeichnet, daß die Magneteinrichtungen (15, 15'; 16, 16') eine in ihrer Ausdehnungsebene (25, 26) in Gehäuselängsrichtung (5) ausgerichtete Längspolarisation aufweisen, wobei innerhalb eines jeweiligen Magneteinrichtungspaares (15, 16; 15', 16') ungleichnamige Magnetpole einander quer zur Gehäuselängsrichtung (5) gegenüberliegen.

13. Antriebsvorrichtung nach Anspruch 12 in Verbindung mit einem der Ansprüche 4 bis 6, dadurch gekennzeichnet, daß in Gehäuselängsrichtung (5) benachbarte Magnetelemente (23; 24) einer jeweiligen Magneteinrichtung (15, 15'; 16, 16') so angeordnet sind, daß jeweils gleichnamige Magnetpole einander zugewandt sind, wobei zwischen benachbarten Magnetelementen (23; 24) Flußleitstücke (46) angeordnet sein können.

14. Antriebsvorrichtung nach einem der Ansprüche 1 bis 13, dadurch gekennzeichnet, daß die Magneteinrichtungen(15, 15'; 16, 16') bzw. deren Magnetelemente (23; 24) zumindest teilweise in einem Trag- oder Abdeckteil (36) eingebettet sind, das inbesondere aus Kunststoffmaterial besteht.

15. Antriebsvorrichtung nach einem der Ansprüche 1 bis 14, dadurch gekennzeichnet, daß am Abtriebsteil (8) axial beidseits der äußeren Magneteinrichtung (16, 16') jeweils mindestens ein zumindest während des Betriebes auf den ebenen Wandabschnitt (18, 18') des Gehäuses (3) einwirkendes Drückelement (47) vorgesehen ist, das zweckmäßigerweise als bezüglich dem Abtriebsteil (8) drehbar gelagerte Drückrolle (54) ausgebildet ist.

16. Antriebsvorrichtung nach Anspruch 15, dadurch gekennzeichnet, daß der ebene Wandabschnitt (18, 18') außen mit einem insbesondere aus unmagnetischem Federstahl bestehenden Schutzstreifen belegt ist, mit dem die Drückelemente (47) in Kontakt stehen.

17. Antriebsvorrichtung nach Anspruch 16, dadurch gekennzeichnet, daß der Schutzstreifen (48) auf den ebenen Wandabschnitt (18, 18') des Gehäuses (3) aufgeklebt ist, wobei die längsseitigen Ränder der Klebeschicht in denjenigen Bereichen der Gehäusewand (3) zu liegen kommen, in denen bei betriebsbedingter Innendruckbeaufschlagung des Gehäuses (3) eine Wechselzone (53) zwischen Zug- und Druckspannungen liegt.

18. Antriebsvorrichtung nach Anspruch 16 oder 17, dadurch gekennzeichnet, daß die Dicke des ebenen Wandabschnittes (18, 18') des Gehäuses (3) und die Dicke des Schutzstreifens (48) so aufeinander abgestimmt sind, daß bei aufgeklebtem Schutzstreifen (48) die Klebeschicht im Bereich der spannungsneutralen Faser des Klebeverbundes angeordnet ist.

19. Antriebsvorrichtung nach einem der Ansprüche 1 bis 18, dadurch gekennzeichnet, daß zwischen dem Abtriebsteil (8) und dem Gehäuse (3) eine insbesondere aus mindestens einer Gleitflächenpaarung (57) bestehende Längsführung vorgesehen ist.

20. Antriebsvorrichtung nach einem der Ansprüche 1 bis 19, dadurch gekennzeichnet, daß das rohrförmige Gehäuse (3) längsseits über vier Gehäusewände (19, 19', 20, 20') verfügt, die im Querschnitt gesehen eine rechteckähnliche Struktur bilden und sich paarweise gegenüberliegen, wobei an wenigstens einer der Gehäusewände der ebene Wandabschnitt (18, 18') ausgebildet ist.

21. Antriebsvorrichtung nach Anspruch 20, dadurch gekennzeichnet, daß an mindestens einer und zweckmäßigerweise an beiden der die längeren Rechteckseiten bildenden Gehäusewände (19, 19') ein von Magneteinrichtungen (15, 16; 15', 16') flankierter ebener Wandabschnitt (18, 18') vorgesehen ist, während die die schmäleren Rechteckseiten bildenden Gehäusewände (20, 20') von Magneteinrichtung unflankiert sind.

22. Antriebsvorrichtung nach einem der Ansprüche 1 bis 21, dadurch gekennzeichnet, daß mehrere mit Antriebsteilen (7) ausgestattete Gehäuse (3) vorgesehen sind, die Kupplungsmittel (63, 64) zur längsseitigen Aneinanderreihung und Bildung eines in einer Ausdehnungsebene (58) liegenden Gehäusekomplexes (59) aufweisen, wobei dem Gehäusekomplex (59) ein allen Antriebsteilen (7) gemeinsames Gesamt-Abtriebsteil (65) zugeordnet ist, das die äußeren Magneteinrichtungen (16, 16') trägt.

23. Antriebsvorrichtung nach einem der Ansprüche 1 bis 22, dadurch gekennzeichnet, daß sie als kolbenstangenloser Arbeitszylinder (2) ausgebildet ist, wobei das Antriebsteil (7) als
Kolben und das Gehäuse (3) als nicht-rotationssymmetrisches Zylinderrohr ausgebildet ist.

## Claims

1. Driving device for the movement of objects, with a tubular housing (3), on which a movement unit (6) is guided with a facility for longitudinal adjustment, with a driving member (7) located in the interior (9) of the housing (3) and, magnetically motion-coupled to the former, a driven member (8) located outside on the housing (3,) wherein for magnetic coupling an internal permanently magnetic device (15, 15') is provided on the driving member (7), and an external permanently magnetic device (16, 16') working in conjunction with the former is provided on the driven member (8), characterized in that the wall (19, 19', 20, 20') of the housing (3) located between the driving member (7) and the driven member (8) has one or more strip-like wall sections (18, 18') with smooth extension extending along the possible stroke of the movement unit (6), and that the two magnetic devices (15, 15', 16, 16') each have a smooth extension and are aligned parallel to the smooth wall section (18, 18') which runs between the two magnetic devices (15, 16; 15', 16').

2. Driving device according to claim 1, characterized in that in each case several internal and external magnetic devices (15, 15', 16, 16') are located on the driving member (7) and the driven member (8), resulting in several pairs (15, 16; 15', 16') of internal and external smooth magnetic devices, with in each case a smooth wall section (18, 18') of the housing (3) extending between them.

3. Driving device according to claim 2, characterized in that the housing (3) has two smooth wall sections (18, 18') lying at right-angles to the longitudinal axis (5) of the housing and running parallel to one another, with a pair of magnetic devices (15, 16; 15', 16') assigned to each.

4. Driving device according to any of claims 1 to 3, characterized in that each magnetic device (15, 15', 16, 16') comprises several plate or bar-shaped magnet elements (22, 24), arranged consecutively along the longitudinal axis (5) of the housing (3), with each magnet element (23) of an internal magnetic device (15, 15') lying opposite a magnet element (24) of the external magnetic device (16, 16') assigned to it at right-angles to the longitudinal axis (5) of the housing.

5. Driving device according to claim 4, characterized in that each magnet element (23, 24) - in longitudinal section according to a longitudinal plane of intersection extending along the longitudinal direction (5) of the housing and at right-angles to the extension plane (25, 26) of the magnetic device (15, 15', 16, 16') - has a rectangular cross-section.

6. Driving device according to claim 4 or 5, characterized in that several and in particular all magnet elements (23, 24) of one or more magnetic devices (15, 15', 16, 16') are formed of magnetic sections of a one-piece magnetic disc.

7. Driving device according to any of claims 1 to 6, characterized in that the magnetic devices (15, 15', 16, 16') have a transverse polarization aligned at right-angles to their extension plane (25, 26), with opposite magnetic poles facing one another within each pair of magnetic devices (15, 16; 15', 16').

8. Driving device according to claim 7 in conjunction with any of claims 4 to 6, characterized in that magnet elements (23; 24) of any magnetic device (15, 15', 16, 16') which are adjacent along the longitudinal axis (5) of the housing are arranged with opposing magnetic pole alignment.

9. Driving device according to claim 8, characterized in that consecutive magnet elements (23; 24) along the longitudinal axis (5) of the housing are arranged with clearance from one another, with the intermediate spaces expediently free from magnetic and magnetizable material.

10. Driving device according to any of claims 7 to 9, characterized in that a flux conductance plate (34, 35) extending along all magnet elements (23, 24) and with which the magnet elements (23, 24) are expediently in contact, is provided on that inner or outer side of each internal and/or external magnetic device (15, 15', 16, 16') facing away from each assigned magnetic device (15, 15', 16, 16').

11. Driving device according to claim 10 in conjunction with claim 2 or 3, characterized in that a central flux conductance plate (35) for the magnet elements (23) of all internal magnetic devices (15, 15') is provided on the driving member (7).

12. Driving device according to any of claims 1 to 6, characterized in that the magnetic devices (15, 15', 16, 16') have a longitudinal polarization aligned in their extension plane (25, 26) along the longitudinal axis (5) of the housing, with opposite magnetic poles lying opposite one another at right-angles to the longitudinal axis (5) of the housing within any respective pair of magnetic devices (15, 16; 15', 16').

13. Driving device according to claim 12 in conjunction with any of claims 4 to 6, characterized in that magnet elements (23; 24) of any particular magnetic device (15, 15', 16, 16') adjacent along the longitudinal axis (5) of the housing are so arranged that in each case like magnetic poles are facing one another, while flux conductance elements (46) may be located between adjacent magnet elements (23; 24).

14. Driving device according to any of claims 1 to 13, characterized in that the magnetic devices (15, 15', 16, 16') and their magnet elements (23; 24) are at least partly embedded in a support or cover section (36), in particular made of plastic material.

15. Driving device according to any of claims 1 to 14, characterized in that provided on the driven member (8) axially either side of the external magnetic devices (16, 16') is in each case at least one pressure element (47) acting on the smooth wall section (18, 18') of the housing (3) during operation, expediently designed as a pressure roll (54) mounted pivotably with respect to the driven member (8).

16. Driving device according to claim 15, characterized in that the smooth wall section (18, 18') is covered externally by a protective strip, in particular made of non-magnetic spring steel, with which the pressure elements (47) are in contact.

17. Driving device according to claim 16, characterized in that the protective strip (48) is bonded on to the smooth wall section (18, 18') of the housing (3), with the long side edges of the adhesive coating coming to lie in those areas of the housing wall (3) in which, when the housing (3) is subjected to internal pressure due to operation, there is a changeover zone (53) between tensile and compressive stresses.

18. Driving device according to claim 16 or 17, characterized in that the thickness of the smooth wall section (18, 18') of the housing (3) and the thickness of the protective strip (48) are so matched that, with the protective strip (48) bonded on, the adhesive coating is located in the zone of the stress-neutral fibres of the adhesive bond.

19. Driving device according to any of claims 1 to 18, characterized in that a longitudinal guide comprised in particular of one or more pairs of slide surfaces (57) is provided between the driven member (8) and the housing (3).

20. Driving device according to any of claims 1 to 19, characterized in that the tubular housing (3) has on its long sides four housing walls (19, 19', 20, 20') forming a rectangular structure viewed in cross-section and lying opposite one another in pairs, with the smooth wall section (18, 18') formed on one or more of the housing walls.

21. Driving device according to claim 20, characterized in that, on at least one and expediently on both of the longer rectangular sides forming housing walls (19, 19'), a smooth wall section (18, 18') flanked by magnetic devices (15, 16; 15', 16') is provided, while the housing walls (20, 20') forming the narrower rectangular sides are not flanked by magnetic devices.

22. Driving device according to any of claims 1 to 21, characterized in that several housings (3) equipped with drive members (7) are provided, with means of coupling (63, 64) for lining up on the long side and forming a housing complex (59) lying in an extension plane (58), wherein the housing complex (59) is assigned an overall driven member (65) common to all driving members (7) and carrying all the external magnetic devices (16, 16').

23. Driving device according to any of claims 1 to 22, characterized in that it is designed as a rodless working cylinder 92), wherein the driving member (7) is in the form of a piston and the housing is in the form of a non-rotationally-symmetrical cylinder barrel.

## Revendications

1. Dispositif d'entraînement pour déplacer des objets, avec un boîtier tubulaire (3) sur lequel une unité de déplacement (6) est guidée en déplacement longitudinal, unité qui présente une partie menante (7) disposée à l'intérieur (9) du boîtier (3) et une partie menée (8), couplée magnétiquement en déplacement à la partie menante (7) et disposée extérieurement sur le boîtier (3), un système intérieur d'aimants (15, 15') à aimantation permanente étant prévu sur la partie menante (7) et un système extérieur d'aimants (16, 16') à aimantation permanente, coopérant avec le système intérieur, étant prévu sur la partie menée (8) pour le couplage magnétique, **caractérisé** en ce que la paroi (19, 19', 20, 20') du boîtier (3), qui est disposée entre la partie menante (7) et la partie menée (8), présente au moins une partie de paroi (18, 18') à développement plan, du genre bande, s'étendant le long de la course potentielle de l'unité de déplacement (6), et en ce que les deux systèmes d'aimants (15, 15', 16, 16') possèdent chacun un développement plan et sont orientés parallèlement à la partie de paroi plane (18, 18'), qui s'étend entre les deux systèmes d'aimants (15, 16 ; 15', 16').

2. Dispositif d'entraînement selon la revendication 1, **caractérisé** en ce que plusieurs systèmes intérieurs et extérieurs d'aimants (15, 15', 16, 16') sont respectivement disposés sur la partie menante (7) et sur la partie menée (8), de sorte qu'on obtient plusieurs paires (15, 16 ; 15', 16') de systèmes d'aimants plans intérieurs et extérieurs, entre lesquels s'étend chaque fois une partie de paroi plane (18, 18') du boîtier (3).

3. Dispositif d'entraînement selon la revendication 2, **caractérisé** en ce que le boîtier (3) présente deux parties de paroi planes (18, 18') se faisant face transversalement à la direction longitudinale (5) du boîtier et s'étendant parallèlement entre elles, à chacune desquelles est associée une paire respective de systèmes d'aimants (15, 16 ; 15', 16').

4. Dispositif d'entraînement selon l'une des revendications 1 à 3, **caractérisé** en ce que chaque système d'aimants (15, 15', 16, 16') est constitué de plusieurs aimants individuels (23, 24) en forme de plaque ou de barreau, qui sont disposés les uns à la suite des autres dans la direction longitudinale (5) du boîtier (3), un aimant individuel (23) d'un système intérieur d'aimants (15, 15') faisant chaque fois face, transversalement à la direction longitudinale (5) du boîtier, à un aimant individuel (24) du système extérieur d'aimants (16, 16') associé à ce système intérieur d'aimants (15, 15').

5. Dispositif d'entraînement selon la revendication 4, **caractérisé** en ce que chaque aimant individuel (23, 24) présente une section rectangulaire - vu en coupe longitudinale selon un plan de coupe longitudinale s'étendant dans la direction longitudinale (5) du boîtier et perpendiculairement au plan de développement (25, 26) du système d'aimants (15, 15', 16, 16').

6. Dispositif d'entraînement selon la revendication 4 ou 5, **caractérisé** en ce que plusieurs et notamment tous les aimants individuels (23, 24) d'au moins un système d'aimants (15, 15', 16, 16') sont formés par des parties magnétiques d'une plaque aimentée d'un seul tenant.

7. Dispositif d'entraînement selon l'une des revendications 1 à 6, **caractérisé** en ce que les systèmes d'aimants (15, 15', 16, 16') présentent une polarisation transversale orientée perpendiculairement à leur plan de développement (25, 26), des pôles magnétiques de polarités contraires se faisant mutuellement face à l'intérieur de chaque paire (15, 16 ; 15', 16') de systèmes d'aimants.

8. Dispositif d'entraînement selon la revendication 7 dépendante de l'une des revendications 4 à 6, **caractérisé** en ce que les aimants individuels (23 ; 24) d'un système respectif d'aimants (15, 15' ; 16, 16') qui sont voisins dans la direction longitudinale (5) du boîtier sont disposés avec des orientations mutuellement opposées de leurs pôles magnétiques.

9. Dispositif d'entraînement selon la revendication 8, **caractérisé** en ce que les aimants individuels (23 ; 24) qui se succèdent dans la direction longitudinale (5) du boîtier sont disposées à distance les uns des autres, les espaces intermédiaires étant avantageusement dépourvus de matériau magnétique et magnétisable.

10. Dispositif d'entraînement selon l'une des revendications 7 à 9, **caractérisé** en ce qu'une plaque conductrice de flux respective (34, 35), s'étendant le long de tous les aimants individuels (23, 24) et avec laquelle les aimants individuels (23, 24) sont avantageusement en contact, est prévue sur le côté respectivement intérieur ou extérieur, d'un système respectivement intérieur et/ou extérieur d'aimants (15, 15' ; 16, 16') , qui est opposé au système d'aimants (15, 15' ; 16, 16') respectivement associé.

11. Dispositif d'entraînement selon la revendication 10 dépendante de la revendication 2 ou 3, **caractérisé** en ce qu'une plaque conductrice de flux centrale (35) pour les aimants individuels (23) de tous les systèmes intérieurs d'aimants (15, 15') est prévue sur la partie menante (7).

12. Dispositif d'entraînement selon l'une des revendications 1 à 6, **caractérisé** en ce que les systèmes d'aimants (15, 15' ; 16, 16') présentent une polarisation longitudinale orientée dans leur plan de développement (25, 26) dans la direction longitudinale (5) du boîtier, des pôles magnétiques de polarités contraires se faisant, à l'intérieur de chaque paire de systèmes d'aimants (15, 16 ; 15', 16'), mutuellement face transversalement à la direction longitudinale (5) du boîtier.

13. Dispositif d'entraînement selon la revendication 12 dépendante de l'une des revendications 4 à 6, **caractérisé** en ce que les aimants individuels (23 ; 24) d'un système respectif d'aimants (15, 15' ; 16, 16') qui sont voisins dans la direction longitudinale (5) du boîtier sont disposés de telle sorte que des pôles magnétiques de même polarité se font chaque fois face, des éléments conducteurs de flux (46) pouvant être disposés entre les aimants individuels voisins (23 ; 24).

14. Dispositif d'entraînement selon l'une des revendications 1 à 13, **caractérisé** en ce que les systèmes d'aimants (15, 15' ; 16, 16') ou encore leurs aimants individuels (23 ; 24) sont au moins partiellement encastrés dans un élément porteur ou de recouvrement (36), qui est notamment réalisé en matière plastique.

15. Dispositif d'entraînement selon l'une des revendications 1 à 14, **caractérisé** en ce qu'au moins un élément presseur respectif (47), agissant au moins pendant le fonctionnement sur la partie de paroi plane (18, 18') du boîtier (3), est prévu sur la partie menée (8) axialement de part et d'autre du système extérieur d'aimants (16, 16'), élément qui est avantageusement réalisé sous la forme d'un rouleau presseur (54) monté rotatif par rapport à la partie menée (8).

16. Dispositif d'entraînement selon la revendication 15, **caractérisé** en ce que la partie de paroi plane (18, 18') est revêtue extérieurement d'une bande de protection réalisée notamment en acier à ressort non magnétique, bande avec laquelle les éléments presseurs (47) sont en contact.

17. Dispositif d'entraînement selon la revendication 16, **caractérisé** en ce que la bande de protection (48) est collée sur la partie de paroi plane (18, 18') du boîtier (3), les bords longitudinaux de la couche de colle venant se placer dans les régions de la paroi du boîtier (3) dans lesquelles se trouve, lors de la sollicitation en pression intérieure du boîtier (3) qui est due au fonctionnement, une zone d'alternance (53) entre contraintes de traction et de compression.

18. Dispositif d'entraînement selon la revendication 16 ou 17, **caractérisé** en ce que l'épaisseur de la partie de paroi plane (18, 18') du boîtier (3) et l'épaisseur de la bande de protection (48) sont mutuellement adaptées de telle sorte que, lorsque la bande de protection (48) est collée, la couche de colle est disposée dans la région des fibres à contrainte neutre de l'assemblage collé.

19. Dispositif d'entraînement selon l'une des revendications 1 à 18, **caractérisé** en ce qu'un guide longitudinal, constitué notamment d'au moins une paire de faces de glissement (57), est prévu entre la partie menée (8) et le boîtier (3).

20. Dispositif d'entraînement selon l'une des revendications 1 à 19, **caractérisé** en ce que le boîtier tubulaire (3) dispose dans le sens longitudinal de quatre parois de boîtier (19, 19', 20, 20') qui, vues en coupe transversale, forment une structure du genre rectangle et se font face par paires, la partie de paroi plane (18, 18') étant formée sur au moins une des parois de boîtier.

21. Dispositif d'entraînement selon la revendication 20, **caractérisé** en ce qu'une partie de paroi plane (18, 18'), flanquée de systèmes d'aimants (15, 16 ; 15', 16'), est prévue sur au moins une des, et avantageusement sur les deux, parois de boîtier (19, 19') formant les grands côtés du rectangle, tandis que les parois de boîtier (20, 20') formant les petits côtés du rectangle ne sont pas flanquées de systèmes d'aimants.

22. Dispositif d'entraînement selon l'une des revendications 1 à 21, **caractérisé** en ce que sont prévus plusieurs boîtiers (3) équipés de parties menantes (7), boîtiers qui présentent des moyens d'accouplement (63, 64) pour les juxtaposer le long de leurs bords longitudinaux et former un ensemble de boîtiers (59) situé dans un plan de développement (58), une partie menée globale (65), commune à toutes les parties menantes (7) et portant les systèmes extérieurs d'aimants (16, 16'), étant associée à l'ensemble de boîtiers (59).

23. Dispositif d'entraînement selon l'une des revendications 1 à 22, **caractérisé** en ce qu'il est réalisé sous la forme d'un vérin de travail (2) sans tige de piston, la partie menante (7) étant réalisée sous forme de piston et le boîtier (3) sous forme de tube cylindrique sans symétrie de révolution.
